(19) Europäisches Patentamt
European Patent Office
Office européen des brevets

(11) Numéro de publication : **0 342 075 B1**

# (12) FASCICULE DE BREVET EUROPEEN

(45) Date de publication du fascicule du brevet : **04.12.91 Bulletin 91/49**

(51) Int. Cl.$^5$ : **C01B 33/20**, B01J 29/04

(21) Numéro de dépôt : **89401098.2**

(22) Date de dépôt : **19.04.89**

(54) **Synthèse de nouveaux gallosilicates de structure MFI.**

(30) Priorité : **11.05.88 FR 8806509**

(43) Date de publication de la demande : **15.11.89 Bulletin 89/46**

(45) Mention de la délivrance du brevet : **04.12.91 Bulletin 91/49**

(84) Etats contractants désignés : **BE DE GB IT NL**

(56) Documents cités :
**EP-A- 0 034 727**
**EP-A- 0 094 288**
**EP-A- 0 219 804**
**US-A- 4 676 958**

(73) Titulaire : **INSTITUT FRANCAIS DU PETROLE**
**4, Avenue de Bois-Préau**
**F-92502 Rueil-Malmaison (FR)**

(72) Inventeur : **Seive, Alain**
**21, rue du Manège**
**F-68100 Mulhouse (FR)**
Inventeur : **Guth, Jean-Louis**
**59, rue Bellevue**
**F-68200 Mulhouse (FR)**
Inventeur : **Raatz, Francis**
**10, Allée Jacques Prévert**
**F-75010 Paris (FR)**
Inventeur : **Petit, Laurent**
**10, rue Alibert**
**F-75010 Paris (FR)**

**EP 0 342 075 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des nouvelles zéolithes du type gallosilicate de structure MFI, un nouveau procédé de synthèse de zéolithes du type gallosilicate de structure MFI et les produits obtenus par ce procédé.

La composition des zéolithes du type gallosilicate à l'état déshydraté et calciné est généralement représentée par la formule approximative suivante :

$$(M^{n+})_{x/n}[(GaO_2)_x(SiO_2)_{96-x}]$$

où M représente un élément électropositif de valence n tel qu'un élément alcalin ou alcalino terreux, x peut varier de 0.1 à 10.

Les zéolithes sont les tectosilicates cristallisés dont la structure est constituée de l'assemblage de tétraèdres $TO_4$, deux tétraèdres différents ne partageant qu'un seul oxygène en commun. La nature de l'élément T est variable, généralement on trouve à côté de l'élément tétravalent Si, des éléments trivalents tels que le bore, l'aluminium et dans le cadre de la présente invention le gallium. L'arrangement particulier des tétraèdres $TO_4$ dans les trois directions de l'espace ménage dans la structure un réseau de canaux et/ou de cavités dont les dimensions sont proches de celles des molécules organiques habituelles ( < 1.2 nm) ( < 1.2 × $10^{-9}$$_m$). Dans les zéolithes synthétisées dans les milieux alcalins conventionnels, le déficit de charge lié à la présence de l'élément trivalent dans les tétraèdres est compensé par un ou plusieurs types de cations de compensation : alcalin, alcalino-terreux associés éventuellement à des cations organiques.

Les zéolithes sont des solides qui combinent des propriétés remarquables : ce sont des tamis moléculaires, des échangeurs cationiques et des solides pouvant présenter diverses propriétés après des modifications adéquates des propriétés acides. Les applications industrielles des zéolithes sont nombreuses, c'est ainsi que leurs propriétés d'échange d'ions et d'adsorption sélective sont utilisées pour des purifications de gaz ou de liquides et pour la séparation d'hydrocarbures paraffiniques ou aromatiques. Elles sont également utilisées comme catalyseurs ou supports de catalyseurs et ceci pour des réactions d'isomérisation, de craquage, de refomage, de polymérisation, d'aromatisation, etc.

L'utilisation des zéolithes comme solides microporeux en adsorption sélective ou en catalyse nécessite l'élimination au moins partielle par échange ou calcination des espèces insérées pendant la synthèse. Chaque type de zéolithe possède alors une structure microporeuse distincte liée à la géométrie de la charpente ainsi qu'au nombre et à la taille des cations de compensation présents. La variation des dimensions et formes des canaux et cavités d'un type à l'autre entraîne des changements des propriétés adsorbantes. Seules les molécules ayant certaines dimensions et formes sont capables d'entrer dans les pores d'une zéolithe donnée.

La composition chimique des zéolithes, c'est à dire la nature des éléments présents dans les tétraèdres $TO_4$ et des cations de compensation est également un facteur important intervenant dans la sélectivité de l'adsorption et surtout dans l'activité catalytique des solides.

Il existe actuellement différents travaux décrivant les synthèses et les applications de nombreuses zéolithes de type gallosilicate. On peut citer les brevets : USA 3 702 886 (1972) ; DE-A-2755770 (1978) ; US-A-4554146 (1985). Dans certains de ces gallosilicates, le gallium semble être présent comme élément de la charpente tétraédrique et dans d'autres essentiellement sous forme de cation de compensation.

Les zéolithes du type gallosilicate, contenant l'élément gallium dans les tétraèdres de la charpente, décrites dans la littérature, sont préparées par cristallisation hydrothermale de mélanges réactionnels contenant des sources d'oxydes de métaux alcalins ou alcalino-terreux, de silice, d'oxyde de gallium et/ou d'une espèce organique particulière. Les milieux réactionnels sont caractérisés par un pH basique généralement supérieur à 10, une telle concentration en ions $OH^-$ facilite la cristallisation de la zéolithe en assurant la dissolution des sources de silice, de gallium, et le transfert des espèces solubles ainsi obtenues sur la zéolithe en voie de formation. Il semble également que la présence d'espèces organiques, en particulier des cations dérivés de bases organiques interviennent directement dans la formation de la structure de certaines zéolithes.

Cependant les synthèses de zéolithes en milieu alcalin présentent plusieurs inconvénients. C'est ainsi que les zéolithes synthétisées sont généralement métastables, il est donc possible d'obtenir des phases solides plus stables non désirées. Ce risque s'accroît lorsque la quantité à préparer augmente. C'est typiquement le cas pour des synthèses à l'échelle industrielle. D'autre part la synthèse de ces zéolithes métastables n'est possible que dans des milieux fortement sursaturés, ceci provoque une nucléation rapide au détriment de la croissance et par conséquent la formation de cristaux de petites tailles (environ 1 µm) (ou 1 × $10^{-6}$ m). Or, si l'obtention de petits cristaux peut être favorable pour certaines applications comme la détergence (échange d'ions), il est connu que les petits cristaux sont moins stables thermiquement que les gros cristaux ; ceci peut poser des problèmes lors de la préparation de catalyseurs.

Les zéolithes utilisées en catalyse acide sont au moins en partie sous forme protonée et sont donc

débarrassées au moins partiellement des cations de compensation alcalin ou alcalino-terreux introduits lors de la synthèse. Dans la mesure où généralement on cherche à obtenir une teneur en alcalins ou alcalino terreux aussi faible que possible, il est nécessaire de procéder à des échanges répétés par $NH_4^+$ suivis de une ou plusieurs calcinations pour décomposer $NH_4^+$ en $H^+$. Pour éviter cette étape d'échange d'ions il faudrait entièrement remplacer les cations alcalins par des cations $NH_4^+$ lors de la synthèse. Or ceci n'est pas possible lorsque le pH est supérieur ou égal à 10, $NH_4^+$ étant dans ces conditions transformé en $NH_3$. D'autre part, les synthèses effectuées à des pH où le cation $NH_4^+$ est stable sont difficiles et longues à cause de la faible solubilité des sources de silice et d'alumine à ces bas pH.

La présente invention a pour objet une nouvelle zéolithe synthétique du type gallosilicate de structure MFI de formule chimique approchée après calcination à 550°C sous air :

$$(M^{n+})_{x'/n} (GaO_2)_x (SiO_2)_{96-x}$$

où x' est compris entre 0,1 et 10

M est un proton résultant de la décomposition thermique, d'au moins un cation azoté, et/ou au moins un cation non décomposable issu du milieu réactionnel.

n est la valence de M.

La zéolithe du type gallosilicate de la présente invention est caractérisée :

— un diagramme de diffraction X représenté dans les tableaux 1 et 2,

— une teneur en fluor comprise entre 0,02% et 1,5% poids, et de préférence entre 0,02 et 0,60,

— un rapport molaire $Si^{IV}/Ga^{III}$ au moins égal à 8,6.

Les zéolithes du type gallosilicate de la présente invention possèdent des propriétés acides tout à fait différentes de celles des zéolithes de structure MFI classiques obtenues en milieu alcalin. C'est la présence de fluor et plus spécialement la procédure par laquelle le fluor est incorporé dans les solides qui sont responsables de ces propriétés acides particulières.

En effet après synthèse et élimination des composés décomposables par calcination à une température supérieure à au moins 400°C en présence d'oxygène (à ce stade le solide est exempt de cations alcalins ou alcalino-terreux et plus généralement de cations non décomposables), les solides selon l'invention présentent alors un spectre caractéristique de vibration infrarouge dans la région des OH (3900-3400 $cm^{-1}$) qui se distingue de celui des gallosilicates de structure MFI synthétisés suivant les techniques connues de l'art antérieur. En effet le spectre infrarouge possède des bandes silanols Si-OH (vers 3740 $cm^{-1}$) et GaOH (vers 3620 $cm^{-1}$) moins intenses que celle d'un gallosilicate classique de même rapport Si/Ga. L'intensité de la bande correspondant aux groupes GaOH est généralement inférieure de moitié à celle que l'on obtient pour un gallosilicate de structure MFI de même rapport Si/Ga préparé dans les milieux de synthèse classiques connus dans l'art antérieur. La teneur réduite en hydroxyles des gallosilicates de structure MFI selon l'invention après l'étape de calcination post synthèse est confirmée par les capacités d'échange ionique réduites de ces solides. En effet les capacités d'échanges pour des cations tels que $Na^+$, $K^+$, $Pt(NH_3)_4^{2+}$, $Ga^{3+}$ etc sont inférieures à 80% et plus généralement 40%, voire même 20%, de la capacité d'échange totale que l'on peut calculer à partir de la teneur en gallium.

Les gallosilicates de structure MFI selon l'invention dont la capacité d'échange ionique est réduite et dont le nombre de groupes SiOH et Al-OH structuraux est restreint possèdent néanmoins des propriétés acides remarquables. Ainsi la thermodésorption programmée qui permet de rendre compte de l'acidité globale du solide (nombre et force des différents types de sites acides), conduit pour les solides suivant l'invention à des spectres de désorption qui se comparent à ceux que l'on obtiendrait avec un gallosilicate de structure MFI préparé de manière classique. Cependant comme on le verra plus loin l'acidité des solides suivant l'invention est d'une nature différente. L'adsorption de pyridine suivie par infrarouge montre que les solides suivant l'invention possèdent une acidité de type Lewis importante. Généralement, le rapport de la surface de la bande caractéristique des sites de Lewis (1455 $cm^{-1}$) sur la surface de la bande caractéristique des sites de Bronsted (1547 $cm^{-1}$) est deux fois plus important que ce que l'on obtient pour un gallosilicate de structure MFI de même rapport Si/Ga mais préparé dans un milieu conventionnel.

Il est vraisemblable que dans les solides suivant l'invention, une partie importante des sites acides classique du type :

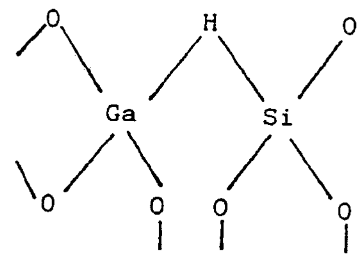

est remplacé par des sites du type :

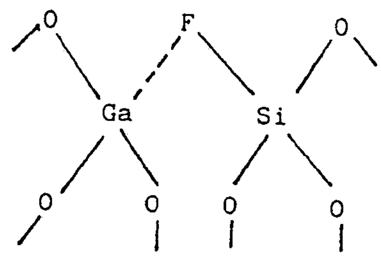

Il apparaît que ces sites sont liés en partie à la présence de fluor et se distinguent par leur nature des sites acides des gallosilicates de structure MFI classiques.

L'introduction de fluor dans les zéolithes est une méthode qui a déjà été proposée pour augmenter l'acidité de ces solides. Cependant dans l'art antérieur le fluor est introduit par des modifications réalisées après la synthèse. A cet effet plusieurs réactifs ont été utilisés, on peut citer :

— HF (A. GHOSH, R. KYDD, J. Catal., 103, ((1987), p. 399) ; US-A-4414189),

— $NH_4F$ (A. BECKER, K. FABIANSKA, S. KOWALAK, Acta. Phys. Chem. 31, (1985), p. 63 ; US-A 4596704),

— $AlF_3$ (C. CHANG, W. CHU, J. MIALE, R. BRIDGER, R. CALVERT, J. Am. Chem. Soc., 106, (1984), p. 8143 ; US-A-4427788),

— $F_2$ (US-A-4297335).

— Fréon (JP-A-60137435).

Les techniques précédemment proposées, outre qu'elles se distinguent tout à fait de la présente invention, souffrent de gros défauts. Elles conduisent dans la plupart des cas à une dégradation inévitable de l'ordre cristallin (exemple des traitements par HF, $F_2$, etc), ou au dépôt de matière aluminique dans le solides (exemple du traitement par $AlF_3$).

Dans la présente invention le fluor est introduit au niveau de la synthèse et permet au contraire d'obtenir des produits très bien cristallisés, exempts de phase parasite extra-réseau.

Par des traitements particuliers il est possible d'éliminer partiellement ou pratiquement totalement le fluor contenu dans les solides selon l'invention sans altérer leur cristallinité ni conduire au dépôt de phase amorphe. Une technique que l'on peut utiliser pour défluorer les solides consiste à procéder à un traitement dans une solution de $NH_4OH$ à des températures comprises par exemple entre la température ambiante (0 à 20°C) et 150°C (traitement sous pression).

L'élimination partielle ou complète du fluor conduit :

— d'une part à l'augmentation dans le spectre IR de deux bandes situées vers 3740 et 3620 $cm^{-1}$ correspondant respectivement aux groupes silanols et aux groupes Ga-OH,

— d'autre part à la restauration totale de la capacité d'échange ionique.

Ainsi en fonction du traitement de défluoration on peut obtenir pour un même rapport Si/Ga de la charpente cristalline des solides contenant une quantité de groupes Si-OH et Ga-OH ainsi qu'une capacité d'échange ionique variables. Un solide partiellement défluoré contient donc, outre des sites acides classiques du type Ga-OH pouvant jouer le rôle de sites d'échange, des sites acides particuliers résultant de la présence de fluor.

L'invention a ainsi pour objet un nouveau procédé de préparation de zéolithes du type gallosilicate de structure MFI où les inconvénients des synthèses classiques décrits précédemment (présence de cations non décomposables etc) n'existent plus et qui permet par ailleurs d'incorporer du fluor dans les solides ce qui confère à ceux-ci, comme décrit ci-dessus des propriétés acides nouvelles. Le nouveau procédé permet d'effectuer des synthèses dans des milieux aqueux ayant un pH inférieur ou égal à 10 et contenant des anions

fluorures qui remplacent les anions $OH^-$ des milieux basiques classiques et assurent la dissolution des sources de silice, de gallium et le transfert de la phase aqueuse des espèces solubles ainsi obtenues vers la zéolithe en voie de cristallisation.

Le nouveau procédé de synthèse est caractérisé par les différentes étapes suivantes :

— Préparation d'un mélange réactionnel en solution à un pH inférieur ou égal à environ 10 comprenant, notamment de l'eau, au moins une source de silicium, une source de gallium trivalent, au moins une source d'au moins un ion fluorure $F^-$ et une source d'au moins un agent structurant fournissant des cations organiques contenant de l'azote. L'agent structurant est choisi parmi les di-, trialkylamines et les cations ammonium dérivant par protonation des dites amines, et/ou les cations tétraalkylammonium, les groupes alkyl étant de préférence les groupes n-propyl. Ledit mélange a une composition en termes de rapports molaires comprise dans les intervalles suivants :

$Si^{IV}/Ga^{III}$ : 2-1000
$F^-/Si^{IV}$ : 0,05-3
structurant organique/$Si^{IV}$ : 0,04-1
$H_2O/Si^{IV}$ : 4-400.

— Chauffage dudit mélange à une température au plus égale à environ 270°C, de manière avantageuse entre 80 et 220°C et de préférence entre 140 et 210°C, pendant une durée suffisante pour obtenir des cristaux de gallosilicate.

— Calcination desdits cristaux à une température supérieure à 400°C et de préférence comprise entre 500 et 600°C. L'étape de calcination a pour but l'élimination des cations organiques ou ammonium contenus dans le solide brut de synthèse.

La composition préférentiellement choisie du mélange réactionnel de départ, en solution aqueuse, est caractérisée par des rapports molaires compris dans les intervalles suivants :

$Si^{IV}/Ga^{III}$ : 8-1000
$F^-/Si^{IV}$ : 0,2-2
structurant organique/$Si^{IV}$ : 0,06-0,75
$H_2O/Si^{IV}$ : 6-200.

Les sources de l'élément $Si^{IV}$ utilisées dans la formation du milieu réactionnel sont, par exemple :

— les silices sous forme d'hydrogels, d'aérogels, de suspensions colloïdales,

— les silices résultant de la précipitation de solutions de silicates solubles, ou de l'hydrolyse d'esters siliciques comme l'ester tétraéthylique de l'acide monoorthosilicique $Si(OC_2H_5)_4$ ou de complexes comme le fluorosilicate d'ammonium $(NH_4)_2SiF_6$, ou de sodium $Na_2SiF_6$,

— les silices préparées par des traitements d'extraction et d'activation de composés cristallisés naturels ou synthétiques.

Les sources de l'élément $Ga^{III}$ utilisées sont, par exemple :

— les sels de gallium (sulfate, nitrate, chlorure, fluorure, acétate par exemple),

— les hydroxydes, les hydroxyoxydes et oxydes de gallium, les gallates et différents esters.

Il est également possible d'utiliser des sources contenant les éléments silicium et gallium associés tels par exemple des verres ou des co-gels. Les sources des éléments silicium et gallium peuvent être engagés sous formes de fluides ou de solides pulvérulents, mais également sous forme d'agglomérats, tels que, par exemple pastilles ou extrudés, pouvant être transformés en zéolithes sans modification de la forme.

Les structurants organiques utilisés sont, par exemple :

— les dialkylamines et les trialkylamines qui seront ensuite transformées in situ en cations lors de l'ajustement du pH à une valeur inférieure à 10,

— les cations tétraalkylammonium ajoutés sous forme d'un de leurs sels comme par exemple le bromure de tétrapropylammonium.

Les groupes alkyl sont de préférence les groupes n-propyl.

Les ions fluorures sont ajoutés sous forme d'acide fluorhydrique ou de fluorures minéraux ou organiques, comme par exemple le fluorure de sodium, le fluorure d'ammonium $NH_4F$, le bifluorure d'ammonium $NH_4HF_2$, le fluorure de tétrapropylammonium $(C_3H_7)_4NF$, ou de composés hydrolysables pouvant libérer au moins un ion fluorure dans l'eau, comme par exemple $SiF_4$ ou $(NH_4)_2SiF_6$. L'acide fluorhydrique, le fluorure d'ammonium ou le bifluorure d'ammonium sont des produits préférés car ils sont peu onéreux et ils permettent d'obtenir des zéolithes de type gallosilicate protonées par simple calcination de la zéolithe résultant de la synthèse.

Le pH du milieu réactionnel est inférieur à environ 10, avantageusement compris entre 2 et 10 et de manière plus préférée entre 4 et 8. Il peut être obtenu soit directement à partir de l'un ou plusieurs des produits composant le milieu réactionnel, soit par l'ajout audit milieu d'un acide, d'une base, d'un sel d'acide d'un sel basique ou d'un mélange tampon complémentaire.

L'ajout de cristaux (germes) au mélange réactionnel et l'agitation facilitent généralement la cristallisation

et ont également une influence sur la taille des cristaux de zéolithes formées.

Le chauffage du mélange réactionnel est fait de préférence dans un autoclave revêtu intérieurement de polytétrafluoroéthylène (PTFE). Suivant la composition, l'ajout de germes, la température et l'agitation ou non, la durée de chauffage se situe généralement entre 6 et 650 heures. Lorsque la cristallisation est achevée, le solide obtenu est filtré et lavé à l'eau désionisée.

Les zéolithes de type gallosilicate obtenues par le procédé selon l'invention sont identifiées de manière commode à partir de leur diagramme de diffraction des rayons X. Il peut être obtenu à l'aide d'un diffractomètre en utilisant la méthode des poudres avec le rayonnement K alpha du cuivre. Les équidistances réticulaires $d_{hkl}$ caractéristiques de l'échantillon sont calculées par la relation de Bragg, à partir de la position des pics de diffraction, représentée par l'angle 2 thêta. L'estimation de l'erreur de mesure $d_{hkl}$ se calcule en fonction de l'erreur absolue 2 thêta affectée à la mesure de 2 thêta par la relation de Bragg. L'erreur absolue 2 thêta, couramment admise, est égale à ± 0,2°. L'intensité relative I/Io, I étant l'intensité d'une raie donnée et Io l'intensité de la raie la plus forte, affectée à chaque valeur de $d_{hkl}$ est estimée à partir de la hauteur du pic de diffraction correspondant. Les tableaux 1 et 2 ci-après représentent les diagrammes de diffraction des rayons X caractéristiques de deux zéolithes de type gallosilicate A et B obtenues selon le procédé de la présente invention, calcinées à 550°C, sous air, le rapport molaire $Si^{IV}/Ga^{III}$ de A est au plus égal à 50, le rapport molaire $Si^{IV}/Ga^{III}$ de B est au moins égal à 50. Les colonnes de $d_{hkl}$ des tableaux 1 et 2 représentent les valeurs extrêmes que peuvent prendre les différentes équidistances $d_{hkl}$. Les valeurs dépendent du rapport $Si^{IV}/Ga^{III}$ et de la nature des cations de compensation, chacune des valeurs indiquées dans les tableaux doit encore être affectée de l'erreur de mesure $d_{hkl}$. Pour caractériser les intensités relatives I/Io, une échelle de symbole est souvent utilisée : FF = très fort, F = fort, mF = moyen à fort, m = moyen, mf = moyen à faible, f = faible, ff = très faible. Ces intensités relatives dépendent également en partie de la composition des zéolithes de type gallosilicate obtenues.

Les solides suivant l'invention peuvent être utilisés, après éventuellement avoir subi des modifications (échange ionique, dégallation etc) comme bases pour adsorbant ou pour catalyseurs. Parmi les applications possibles en catalyse, on peut citer les réactions de transformation d'hydrocarbures suivantes : craquage, isomérisation, oligomérisation, aromatisation, etc.

DIAGRAMME DE DIFFRACTION RX DES GALLOSILICATES CALCINES A STRUCTURE MONOCLINIQUE SELON L'INVENTION

(les mesures de dhkl ont été arrêtées à des valeurs de l'ordre de 2,97 Å, il est néanmoins possible d'effectuer des mesures de dhkl pour des valeurs de 2 thêta plus grandes)

| dhkl Å ($10^{-10}$ m) | I/Io | dhkl Å ($10^{-10}$ m) | I/Io |
|---|---|---|---|
| 11,00-11,15 | FF | 4,22-4,27 | f |
| 9,99- 9,86 | F | 4,04-4,09 | ff |
| 9,67- 9,79 | m | 3,97-4,02 | ff |
| 8,89- 9,00 | fff | 3,90-3,95 | fff |
| 7,95- 8,06 | fff | 3,82-3,87 | F |
| 7,35- 7,44 | fff | 3,79-3,84 | mF |
| 6,99- 7,09 | fff | 3,77-3,82 | mF |
| 6,62- 6,71 | f | 3,72-3,77 | m |
| 6,29- 6,37 | f | 3,70-3,75 | m |
| 5,92- 6,00 | mf | 3,69-3,73 | m |
| 5,85- 5,93 | f | 3,63-3,6 | ff |
| 5,67- 5,74 | f | 3,60-3,65 | ff |
| 5,63- 5,70 | f | 3,42-3,46 | fff |
| 5,52- 5,59 | f | 3,32-3,37 | fff |
| 5,32- 5,39 | ff | 3,28-3,32 | ff |
| 5,09- 5,15 | fff | 3,23-3,27 | fff |
| 4,98- 5,04 | f | 3,03-3,07 | ff |
| 4,93- 4,99 | f | 3,01-3,05 | ff |
| 4,57- 4,63 | ff | 2,96-3,00 | f |
| 4,32- 4,38 | ff | 2,93-2,97 | ff |

TABLEAU 2

DIAGRAMME DE DIFFRACTION RX DES GALLOSILICATES CALCINES A STRUCTURE ORTHORHOMBIQUE SELON L'INVENTION

| dhkl ($10^{-10}$m) Å | I/Io | dhkl ($10^{-10}$ m) Å | I/Io |
|---|---|---|---|
| 11,03-11,18 | FF | 4,32-4,38 | ff |
| 9,90-10,03 | F | 4,22-4,28 | f |
| 9,65- 9,78 | m | 4,05-4,11 | fff |
| 8,88- 9,00 | fff | 3,97-4,02 | ff |
| 7,93- 8,03 | fff | 3,82-3,87 | F |
| 7,36- 7,45 | fff | 3,78-3,83 | mF |
| 6,99- 7,09 | fff | 3,72-3,77 | m |
| 6,63- 6,72 | ff | 3,69-3,74 | m |
| 6,30- 6,38 | f | 3,62-3,67 | m |
| 5,93- 6,01 | mf | 3,56-3,61 | fff |
| 5,89- 5,97 | f | 3,41-3,45 | ff |
| 5,65- 5,72 | f | 3,32-3,37 | ff |
| 5,52- 5,59 | f | 3,29-3,33 | ff |
| 5,32- 5,39 | ff | 3,23-3,27 | fff |
| 5,07- 5,14 | fff | 3,03-3,07 | ff |
| 4,97- 5,04 | ff | 2,96-3,00 | f |
| 4,93- 4,99 | ff | 2,94-2,97 | ff |
| 4,57- 4,63 | ff | | |

Les mesures de dhkl ont été arrêtées à des valeurs de l'ordre de 2,97 Å, il est néanmoins possible d'effectuer des mesures de dhkl pour des valeurs de 2 thêta plus grandes.

## EXEMPLE N° 1 :

Les synthèses de l'exemple 1 montrent la préparation en milieu fluorure de gallosilicates de type MFI, possédant différents rapports molaires $Si^{IV}/Ga^{III}$.

Les cinq essais (1a, 1b, 1c, 1d, 1e) de cet exemple ont été réalisés à partir de mélanges réactionnels composés de :

— une source de silice de composition $SiO_2$ commercialisée sous le nom d'Aérosil 130,

— une source de gallium : solution de chlorure de gallium préparée par dissolution de gallium métal dans l'acide chlorhydrique concentré, la concentration en $Ga^{III}$ de cette solution est de 0,72 mol/l,

— fluorure d'ammonium ($NH_4F$),
— bromure de tétrapropylammonium (TPA Br),
— germes de cristallisation (cristaux broyés de zéosilites ou gallozéosilites.

Les compositions molaires des différents mélanges réactionnels ainsi préparés, ramenées à une mole de silice sont les suivantes :

$$1\ SiO_2 ;\ x\ GaCl_3 ;\ 0{,}25\ TPABr ;\ 0{,}5\ NH_4F ;\ 50\ H_2O$$

où x varie entre $5\times 10^2$ et $10^{-1}$ (tableau n° 3). Les quantités engagées dans chaque synthèse correspondent à 1/12 de cette formulation.

Les synthèses sont effectuées dans des autoclaves revêtus intérieurement de polytétrafluoroéthylène, les autoclaves sont portés à 200°C pendant 4 jours.

Après refroidissement, les solides obtenus sont séparés des eaux mères par filtration puis lavés. Les cristaux calcinés (550°C, 8 heures) de chacun de ces échantillons possèdent des diagrammes de diffraction des rayons X analogues à ceux présentés dans les tableaux 1 et 2, voir également le tableau 3. Les dimensions des cristaux sont voisines de quelques micromètres.

Dans le tableau 3, nous avons reporté en fonction du paramètre x qui caractérise le mélange réactionnel initial, les pH initiaux et finaux du milieu de synthèse ainsi que les caractéristiques physico-chimiques principales des produits obtenus. Les données de ce tableau, montrent qu'en fonction des caractéristiques du milieu de synthèse, on peut obtenir des solides dont les rapports molaires Si/Ga varient dans une large gamme, et qui contiennent des quantités appréciables de fluor même après l'étape de calcination à 550°C sous air.

TABLEAU 3

| | | Essai 1a | Essai 1b | Essai 1c | Essai 1d | Essai 1e |
|---|---|---|---|---|---|---|
| 1 | x | $10^{-1}$ | $5x10^{-2}$ | $2x10^{-2}$ | $10^{-2}$ | $5x10^{-3}$ |
| | pH initial | 4,5 | 2 | 6,5 | 7 | 7 |
| | pH final | 4 | 2 | 5 | 5 | 7 |
| 2 | Masse obtenue (g) | 5,72 | 5,27 | 5,27 | 5,48 | 5,11 |
| | rapport molaire $Si^{IV}/Ga^{III}$ | 13,6 | 23,8 | 45,6 | 93,0 | 196,0 |
| | % pds ions $F^-$ avant calcination | 0,45 | 0,62 | 0,58 | 0,88 | 1,05 |
| | % pds ions $F^-$ après calcination à 550°C sous air | 0,4 | 0,3 | 0,3 | 0,2 | 0,2 |
| | résultats des diagrammes de diffraction RX | orthorhombique (conforme au tableau 1) | | | monoclinique (conforme au tableau 2) | |

1) Caractéristiques du mélange réactionnel

2) Caractéristique du gallosilicate de structure MFI obtenu.

EXEMPLE N° 2 :

Les préparations de l'exemple n° 2 montrent l'influence de l'absence de germes de cristallisation sur la durée de synthèse sans agitation des gallozéosilites selon l'invention.

Les deux essais (2a, 2b) de cet exemple ont été réalisés à partir des mêmes sources de silice, de gallium et de fluorure que celles utilisées dans l'exemple n° 1. Les compositions molaires des deux mélanges réactionnels pour les deux essais 2a et 2b, ramenées à une mole de silice, sont identiques :

1 $SiO_2$ ; 0,02 $GaCl_3$ ; 0,25 TPABr ; 0,5 $NH_4F$ ; $50H_2O$

Dans cette formulation, le paramètre x de l'exemple 1 est égal à $2 \times 10^{-2}$. Contrairement à ce qui a été retenu pour les préparations de l'exemple 1, aucun germe de cristallisation n'a été ajouté au milieu réactionnel.

Les autoclaves des essais 2a et 2b ont été portés respectivement à 200 et 175°C pendant une période respectivement de 15 et 28 jours, sans agitation. Après refroidissement, des cristaux de 40 micromètre environ sont filtrés, lavés, séchés.

Les diagrammes de diffraction des rayons X des deux échantillons de cristaux, après calcination sous air, sont analogues au diagramme du type monoclinique du tableau n° 1.

L'analyse chimique réalisée sur les produits bruts de synthèse des essais 2a et 2b donne des rapports molaires $Si^{IV}/Ga^{III}$. voisins respectivement de 63 et de 50 et des teneurs en fluor après calcination à 550°C de 0.4 et 0.2% respectivement. Ainsi à partir du même mélange réactionnel, on obtient un gallosilicate de structure MFI dans une large gamme de durées de synthèses ; l'absence de germe conduit simplement à des durées de cristallisation plus longue. Notons que la durée de synthèse influe sur le rapport Si/Ga des cristaux obtenus.

EXEMPLE N° 3 :

Cet exemple montre l'influence de l'agitation, en opérant en absence de germes de cristallisation, sur la durée de synthèse des gallozéosilites selon l'invention.

Cette préparation a été réalisée à partir des mêmes sources de silice et de gallium présentées dans l'exemple n° 1. La composition molaire de ce mélange réactionnel, ramenée à une mole de silice est la suivante, avec une valeur du paramètre x égale à $5 \times 10^{-2}$ :

$$1\ SiO_2 ; 0{,}05\ GaCl_3 ; 0{,}25\ TPABr ; 0{,}5\ NH_4F ; 50\ H_2O.$$

La réaction a été effectuée à 200°C sous agitation pendant 9 jours. Après refroidissement, des cristaux de 25 micromètre environ sont filtrés, lavés, séchés. Le diagramme de diffraction des rayons X des cristaux calcinés est analogue au diagramme du type orthorhombique présenté dans le tableau n° 2. L'analyse chimique de la gallozéosilite ainsi obtenue, donne un rapport molaire $Si^{IV}/Ga^{III}$ voisin de 19, et une teneur en fluor après calcination à 550°C de 0.29% pds.

EXEMPLE N° 4 :

Cet essai montre l'influence simultanée de l'agitation et de la présence de germes de cristallisation sur la durée de synthèse des gallozéosilites selon l'invention.

Les mêmes sources de silice et de gallium présentées dans l'exemple n° 1 ont été utilisées pour réaliser cette préparation. La composition molaire de ce mélange réactionnel, ramenée à une mole de silice est la suivante (le paramètre x de l'exemple 1 est égal à 0.025) :

$$1\ SiO_2 ; 0{,}025\ GaCl_3 ; 0{,}25\ TPABr ; 0{,}5\ NH_4F ; 50H_2O.$$

Le milieu de synthèse contient également 0,10 g de germes de cristallisation (cristaux de gallosilicates broyés).

La réaction a été effectuée à 200°C, sous agitation pendant 40 heures. Après refroidissement, des cristaux de 3 micromètre environ sont filtrés, lavés, séchés. Le diagramme de diffraction des rayons X des cristaux calcinés est analogue au diagramme du type orthorombique présenté dans le tableau n° 2. L'analyse chimique de la gallozéosilite ainsi obtenue donne un rapport molaire $Si^{IV}/Ga^{III}$ voisin de 38 ; sa teneur en fluor après calcination à 550°C sous air est de 0.23% pds.

EXEMPLE N° 5 :

Cet exemple montre qu'il est possible d'engager, lors des synthèses de gallozéosilites selon l'invention, les éléments Si et Ga associés dans un xérogel.

Le xérogel utilisé est formé de la façon suivante :

— on effectue l'hydrolyse acide (pH = 1), sous reflux et sous agitation du tétraorthosilicate d'éthyl $Si(OC_2H_5)_4$, en présence d'eau et d'une solution de chlorure de gallium,

— l'hydrolyse terminée, on ajoute sous agitation de l'ammoniaque concentré jusqu'à ce que le pH de la solution soit voisin de 7, on observe alors la prise en masse de cette solution. Le gel ainsi obtenu est mis à sécher à 70°C dans une étuve. Le rapport molaire $Si^{IV}/Ga^{III}$ du xérogel préparé est voisin de 50.

Ce xérogel est engagé dans un mélange réactionnel de composition molaire, ramenée à une mole de silice,

suivante (facteur x de l'exemple 1 égal à $2 \times 10^{-2}$) :

$$1SiO_2 ; 0,02\ GaCl_3 ; 0,25\ TPABr ; 0,5\ NH_4F ; 50H_2O$$

On opère conformément aux méthodes des exemples précédents, le milieu de synthèse contenant également 0,10 g de germes de cristallisation.

La réaction a été effectuée à 200°C pendant 4 jours. Après refroidissement des cristaux de quelques micromètres sont filtrés, lavés, séchés. Le diagramme de diffraction des rayons X des cristaux calcinés est analogue au diagramme du type monoclinique du tableau n° 1.

L'analyse chimique réalisée sur les produits bruts de synthèse donne un rapport molaire $Si^{IV}/Ga^{III}$ voisin de 54, sa teneur en fluor après calcination à 550°C étant de 0.41% pds.

EXEMPLE N° 6 :

Cet exemple montre qu'il est possible d'éliminer par des traitements post-synthèse le fluor contenu après synthèse et calcination à 550°C dans les solides selon l'invention.

On utilise comme solide de départ, une zéolithe selon l'invention de rapport Si/Ga égal à 30 et de teneur en fluor après calcination à 550°C sous air égale à 0.24% pds. On soumet ce solide à des traitements dans un milieu ammoniacal dans les conditions suivantes :

protocole a) solution de $NH_4OH$ de concentration 0.20N à 140°C pendant 4 heures,
protocole b) solution de $NH_4OH$ de concentration 0.15N à 140°C pendant 2 heures.

Après ces traitements on obtient des solides dont la cristallinité, et le rapport Si/GA ne sont pas altérés mais dont les teneurs en fluor sont très faibles. Le protocole (a) conduit à une teneur en fluor de 0.06% pds tandis que le protocole (b) donne 0.03% pds.

## Revendications

1. Zéolithe synthétique renfermant du fluor et du type gallosilicate de structure MFI, caractérisée par :
— une teneur en fluor comprise entre 0.02% et 1,5% en poids,
— un rapport molaire $Si^{IV}/Ga^{III}$ au moins égal à 8.6,
— un diagramme de diffraction X choisi dans le groupe constitué par le diagramme du tableau I à structure monoclinique et le diagramme du tableau II à structure orthorhombique ci-dessous :

TABLEAU 1

DIAGRAMME DE DIFFRACTION RX DES GALLOSILICATES CALCINES A STRUCTURE MONOCLINIQUE SELON L'INVENTION

(les mesures de dhkl ont été arrêtées à des valeurs de l'ordre de 2.97 Å, il est néanmoins possible d'effectuer des mesures de dhkl pour des valeurs de 2 thêta plus grandes)

| dhkl Å ($10^{-10}$m) | I/Io | dhkl Å ($10^{-10}$m) | I/Io |
|---|---|---|---|
| 11,00-11,1-5 | FF | 4,22-4,27 | f |
| 9.99-9,86 | F | 4.04-4.09 | ff |
| 9,67-9,79 | m | 3,97-4,02 | ff |
| 8,89-9,00 | fff | 3,90-3,95 | fff |
| 7,95-8,06 | fff | 3,82-3,87 | F |
| 7,35-7,44 | fff | 3,79-3,84 | mF |
| 6,99-7,09 | fff | 3,77-3.82 | mF |
| 6.62-6,71 | f | 3,72-3,77 | m |
| 6,29-6,37 | f | 3,70-3,75 | m |
| 5,92-6,00 | mf | 3,69-3,73 | m |
| 5,85-5,93 | f | 3.63-3,6 | ff |
| 5,67-5,74 | f | 3,60-3,65 | ff |
| 5,63-5,70 | f | 3,42-3,46 | fff |
| 5,52-5,59 | f | 3,32-3,37 | fff |
| 5,32-5,39 | ff | 3,28-3,32 | ff |
| 5.09-5,15 | fff | 3,23-3,27 | fff |
| 4,98-5,04 | f | 3,03-3,07 | ff |
| 4,93-4,99 | f | 3,01-3,05 | ff |
| 4,57-4,63 | ff | 2,96-3,00 | f |
| 4,32-4,38 | ff | 2,93-2,97 | ff |

TABLEAU 2

DIAGRAMME DE DIFFRACTION RX DES GALLOSILICATES CALCINES A STRUCTURE ORTHORHOMBIQUE SELON L'INVENTION

| dhkl ($10^{-10}$m) Å | I/Io | dhkl ($10^{-10}$m) Å | I/Io |
|---|---|---|---|
| 11,03-11,1-8 | FF | 4,32-4,38 | ff |
| 9,90-10,03 | F | 4,22-4,28 | f |
| 9,65-9,78 | m | 4,05-4,11 | fff |
| 8,88-9,00 | fff | 3,97-4,02 | ff |
| 7,93-8,03 | fff | 3,82-3,87 | F |
| 7,36-7,45 | fff | 3,78-3,83 | mF |
| 6,99-7,09 | fff | 3,72-3,77 | m |
| 6,63-6,72 | ff | 3,69-3,74 | m |
| 6,30-6,38 | f | 3,62-3,67 | m |
| 5,93-6,01 | mf | 3,56-3,61 | fff |
| 5,89-5,97 | f | 3,41-3,45 | ff |
| 5,65-5,72 | f | 3,32-3,37 | ff |
| 5,52-5,59 | f | 3,29-3,33 | ff |
| 5,32-5,39 | ff | 3,23-3,27 | fff |
| 5,07-5,14 | fff | 3,03-3,07 | ff |
| 4,97-5,04 | ff | 2,96-3,00 | f |
| 4,93-4,99 | ff | 2,94-2,97 | ff |
| 4,57-4,63 | ff | | |

Les mesures de dhkl ont été arrêrées à des valeurs de l'ordre de 2,97 Å, il est néanmoins possible d'effectuer des mesures de dhkl pour des valeurs de 2 thêta plus grandes.

2. Zéolithe selon la revendication 1 dont le spectre infra-rouge possède des bandes Si-OH (vers 3740 $cm^{-1}$) et GaOH (vers 3620 $cm^{-1}$) moins intenses que les gallosilicates de l'art antérieur ayant le même rapport Si/Ga que la zéolithe selon l'invention.

3. Procédé de préparation d'une zéolithe de type gallosilicate à structure MFI caractérisé en ce que

(a) on prépare un mélange réactionnel en solution, à un pH au plus égal à 10, comprenant de l'eau, au moins une source de silicium, au moins une source de gallium trivalent, au moins une source d'au moins un ion fluorure $F^-$ et une source d'au moins un agent structurant fournissant des cations organiques contenant de l'azote, le dit mélange ayant une composition en termes de rapports molaires comprise dans les intervalles suivants :

| | |
|---|---|
| $Si^{IV}/Ga^{III}$ | : 2-1000 |
| $F^-/Si^{IV}$ | : 0,05-3 |
| Structurant organique/$Si^{IV}$ | : 0,04-1 |
| $H_2O/Si^{IV}$ | : 4-400 |

(b) on chauffe le dit mélange à une température au plus égale à 270°C pendant une durée suffisante pour obtenir des cristaux de gallosilicate,

(c) on calcine les dits cristaux à une température supérieure à 400°C pour éliminer les cations organiques ou ammonium contenus dans le solide brut de synthèse.

4. Procédé selon la revendication 3 dans lequel dans l'étape (a), le dit agent structurant est choisi dans le groupe constitué par les dialkylamines, les trialkylamines, les cations ammonium (dérivant par protonation des dites amines) et les cations tétraalkylammonium.

5. Procédé selon la revendication 3 dans lequel dans l'étape (a) le dit mélange a une composition en termes de rapports molaires comprise dans les intervalles suivantes :

| | |
|---|---|
| $Si^{IV}/Ga^{III}$ | : 8-1000 |
| $F^{-}/Si^{IV}$ | : 0.2-2 |
| Structurant organique/$Si^{IV}$ | : 0.06-0.75 |
| $H_2O/Si^{IV}$ | : 6-200. |

6. Procédé selon l'une des revendications 3 à 5 dans lequel l'ion fluorure est choisi dans le groupe constitué par l'acide fluorhydrique, les fluorures minéraux ou organiques d'un métal alcalin et les composés hydrolysables pouvant libérer au moins un anion fluorure dans l'eau.

7. Utilisation d'une zéolithe selon l'une des revendications 1 et 2 comme base pour absorbant.

8. Utilisation d'une zéolithe selon l'une des revendications 1 et 2 comme base pour un catalyseur.

## Patentansprüche

1. Fluor enthaltender synthetischer Zeolith vom Gallosilikat-Typ mit MFI-Struktur, gekennzeichnet durch :
— einen Fluorgehalt zwischen 0,02 und 1,5 Gew.-%,
— ein Molverhältnis $Si^{IV}/Ga^{III}$ von mindestens 8,6,
— ein Röntgenbeugungsdiagramm, ausgewählt aus der Gruppe, bestehend aus dem folgenden Diagramm der Tabelle I mit monokliner Struktur und dem folgenden Diagramm der Tabelle II mit orthorhombischer Struktur

Tabelle 1

Röntgenbeugungsdiagramm von erfindungsgemäßen calcinierten Gallosilikaten mit monokliner Struktur

(Die Messungen von dhkl wurden bei Werten in der Größenordnung von 2,97 Å beendet, es ist jedoch möglich, Messungen von dhkl für grössere Werte von 2 Θ durchzuführen)

| dhkl Å ($10^{-10}$m) | I/Io | dhkl Å ($10^{-10}$m) | I/Io |
|---|---|---|---|
| 11,00-11,15 | FF | 4,22-4,27 | f |
| 9,99-9,86 | F | 4.04-4.09 | ff |
| 9,67-9,79 | m | 3,97-4,02 | ff |
| 8,89-9,00 | fff | 3,90-3,95 | fff |
| 7,95-8,06 | fff | 3,82-3,87 | F |
| 7,35-7,44 | fff | 3,79-3,84 | mF |
| 6,99-7,09 | fff | 3,77-3,82 | mF |
| 6,62-6,71 | f | 3,72-3,77 | m |
| 6,29-8,37 | f | 3,70-3,75 | m |
| 5,92-6,00 | mf | 3,69-3,73 | m |
| 5,85-5,93 | f | 3,63-3,6 | ff |
| 5,67-5,74 | f | 3,60-3,65 | ff |
| 5,63-5,70 | f | 3,42-3,46 | fff |
| 5,52-5,59 | f | 3,32-3,37 | fff |
| 5,32-5,39 | ff | 3,28-3,32 | ff |
| 5,09-5,15 | fff | 3,23-3,27 | fff |
| 4,98-5,04 | f | 3,03-3,07 | ff |
| 4,93-4,99 | f | 3,01-3,05 | ff |
| 4,57-4,63 | ff | 2,96-3,00 | f |
| 4,32-4,38 | ff | 2,93-2,97 | ff |

Tabelle 2

Röntgenbeugungsdiagramm von erfindungsgemäßen calcinierten Gallosilikaten mit orthorhombischer Struktur

| dhkl ($10^{-10}$m) Å | I/Io | dhkl ($10^{-10}$m) Å | I/Io |
|---|---|---|---|
| 11,03-11,18 | FF | 4,32-4,38 | ff |
| 9,90-10,03 | F | 4,22-4,28 | f |
| 9,65-9,78 | m | 4,05-4,11 | fff |
| 8,88-9,00 | fff | 3,97-4,02 | ff |
| 7,93-8,03 | fff | 3,82-3,87 | F |
| 7,36-7,45 | fff | 3,78-3,83 | mF |
| 6,99-7,09 | fff | 3,72-3,77 | m |
| 6,63-6,72 | ff | 3,69-3,74 | m |
| 6,30-6,38 | f | 3,62-3,67 | m |
| 5,93-6,01 | mf | 3,56-3,61 | fff |
| 5,89-5,97 | f | 3,41-3,45 | ff |
| 5,65-5,72 | f | 3,32-3,37 | ff |
| 5,52-5,59 | f | 3,29-3,33 | ff |
| 5,32-5,39 | ff | 3,23-3,27 | fff |
| 5,07-5,14 | fff | 3,03-3,07 | ff |
| 4,97-5,04 | ff | 2,96-3,00 | f |
| 4,93-4,99 | ff | 2,94-2,97 | ff |
| 4,57-4,63 | ff | | |

Die Messungen von dhkl wurden bei Werten in der Grössenordnung von 2,97 Å beendet, es ist jedoch möglich, Messungen von dhkl für größere Werte von 2 Θ durchzuführen.

2. Zeolith nach Anspruch 1, dessen Infrarot-Spektrum weniger starke Si-OH-Banden (bei etwa 3740 $cm^{-1}$) und GaOH-Banden (bei etwa 3620 $cm^{-1}$) als die Gallosilikate des Standes der Technik mit dem gleichen Si/Ga-Verhältnis wie der erfindungsgemäße Zeolith aufweist.

3. Verfahren zur Herstellung eines Zeoliths vom Gallosilikat-Typ mit MFI-Struktur, dadurch gekennzeichnet, daß man

(a) ein Reaktionsgemisch in Lösung bei einem pH-Wert von höchstens 10 herstellt, das Wasser, mindestens eine Siliciumquelle, mindestens eine Quelle für trivalentes Gallium, mindestens eine Quelle mit mindestens einem Fluoridion $F^-$ und eine Quelle für mindestens ein Strukturierungsmittel, das die Stickstoff enthaltenden organischen Kationen liefert, enthält und das eine Zusammensetzung, ausgedrückt durch Molverhältnisse, innerhalb der nachstehend angegebenen Intervalle aufweist :

| | |
|---|---|
| $Si^{IV}/Ga^{III}$ | : 2 - 1 000 |
| $F^-/Si^{IV}$ | : 0,05 - 3 |
| Organisches Strukturmittel/$Si^{IV}$ | : 0,04 - 1 |
| $H_2O/Si^{IV}$ | : 4 - 400 |

(b) das Gemisch auf eine Temperatur von höchstens 270°C für eine Zeitspanne erhitzt, die ausreicht, um Gallosilikat-Kristalle zu erhalten, und

(c) die genannten Kristalle bei einer Temperatur oberhalb 400°C calciniert, um die in dem rohen Feststoff der Synthese enthaltenen organischen Kationen oder Ammoniumkationen zu eliminieren.

4. Verfahren nach Anspruch 3, bei dem in der Stufe (a) das genannte Strukturmittel ausgewählt wird aus der Gruppe, die besteht aus Dialkylaminen, Trialkylaminen, Ammoniumkationen (die aus den genannten Aminen durch Protonierung abgeleitet sind) und Tetraalkylammoniumkationen.

5. Verfahren nach Anspruch 3, bei dem in der Stufe (a) das genannte Gemisch eine Zusammensetzung, ausgedrückt durch die Molverhältnisse, hat, die innerhalb der folgenden Intervalle liegen :

| | |
|---|---|
| $Si^{IV}/Ga^{III}$ | : 8 - 1 000 |
| $F^{-}/Si^{IV}$ | : 0,2 - 2 |
| Organisches Strukturmittel/$Si^{IV}$ | : 0,06 - 0,75 |
| $H_2O/Si^{IV}$ | : 6 - 200 |

6. Verfahren nach einem der Ansprüche 3 bis 5, bei dem das Fluoridion ausgewählt wird aus der Gruppe, die besteht aus der Fluorwasserstoffsäure, den mineralischen oder organischen Fluoriden eines Alkalimetalls und den hydrolysierbaren Verbindungen, die mindestens ein Fluoridanion in Wasser freisetzen können.

7. Verwendung eines Zeoliths nach einem der Ansprüche 1 und 2 als Träger für ein Absorbens.

8. Verwendung eines Zeoliths nach einem der Ansprüche 1 und 2 als Träger für einen Katalysator.

**Claims**

1. Synthetic zeolite containing fluorine and of the gallosilicate type with a MFI structure, comprising :

— a fluorine content ranging from 0.02% to 1.5% by weight,

— a $Si^{IV}/Ga^{III}$ molar ratio at least equal to 8.6,

— an X-ray diffraction diagram selected among the group constituted by the diagram of Table 1 with a monoclinic structure and the diagram of Table 2 with an orthorhombic structure, as herebelow :

## TABLE 1

X-RAY DIFFRACTION DIAGRAM OF THE CALCINED MONOCLINIC STRUCTURE GALLOSILICATES ACCORDING TO THE INVENTION

(the $d_{hkl}$ measurings have been stopped at values ranging about 2.97 Å, it is nevertheless possible to carry out $d_{hkl}$ measurings for higher thêta 2 values)

| $d_{hkl}$ Å ($10^{-10}$ m) | I/Io | $d_{hkl}$ Å ($10^{-10}$ m) | I/Io |
|---|---|---|---|
| 11.00 - 11.15 | FF | 4.22 - 4.27 | f |
| 9.99 - 9.86 | F | 4.04 - 4.09 | ff |
| 9.67 - 9.79 | m | 3.97 - 4.02 | ff |
| 8.89 - 9.00 | fff | 3.90 - 3.95 | fff |
| 7.95 - 8.06 | fff | 3.82 - 3.87 | F |
| 7.35 - 7.44 | fff | 3.79 - 3.84 | mF |
| 6.99 - 7.09 | fff | 3.77 - 3.82 | mF |
| 6.62 - 6.71 | f | 3.72 - 3.77 | m |
| 6.29 - 6.37 | f | 3.70 - 3.75 | m |
| 5.92 - 6.00 | mf | 3.69 - 3.73 | m |
| 5.85 - 5.93 | f | 3.63 - 3.6 | ff |
| 5.67 - 5.74 | f | 3.60 - 3.65 | ff |
| 5.63 - 5.70 | f | 3.42 - 3.46 | fff |
| 5.52 - 5.59 | f | 3.32 - 3.37 | fff |
| 5.32 - 5.39 | ff | 3.28 - 3.32 | ff |
| 5.09 - 5.15 | fff | 3.23 - 3.27 | fff |
| 4.98 - 5.04 | f | 3.03 - 3.07 | ff |
| 4.93 - 4.99 | f | 3.01 - 3.05 | ff |
| 4.57 - 4.63 | ff | 2.96 - 3.00 | f |
| 4.32 - 4.38 | ff | 2.93 - 2.97 | ff |

TABLE 2

X-RAY DIFFRACTION DIAGRAM OF THE CALCINED ORTHORHOMBIC STRUCTURE GALLOSILICATES ACCORDING TO THE INVENTION

| $d_{hkl}$ ($10^{-10}$ m) Å | I/Io | $d_{hkl}$ ($10^{-10}$ m) Å | I/Io |
|---|---|---|---|
| 11.03 - 11.18 | FF | 4.32 - 4.38 | ff |
| 9.90 - 10.03 | F | 4.22 - 4.28 | f |
| 9.65 - 9.78 | m | 4.05 - 4.11 | fff |
| 8.88 - 9.00 | fff | 3.97 - 4.02 | ff |
| 7.93 - 8.03 | fff | 3.82 - 3.87 | F |
| 7.36 - 7.45 | fff | 3.78 - 3.83 | mF |
| 6.99 - 7.09 | fff | 3.72 - 3.77 | m |
| 6.63 - 6.72 | ff | 3.69 - 3.74 | m |
| 6.30 - 6.38 | f | 3.62 - 3.67 | m |
| 5.93 - 6.01 | mf | 3.56 - 3.61 | fff |
| 5.89 - 5.97 | f | 3.41 - 3.45 | ff |
| 5.65 - 5.72 | f | 3.32 - 3.37 | ff |
| 5.52 - 5.59 | f | 3.29 - 3.33 | ff |
| 5.32 - 5.39 | ff | 3.23 - 3.27 | fff |
| 5.07 - 5.14 | fff | 3.03 - 3.07 | ff |
| 4.97 - 5.04 | ff | 2 96 - 3.00 | f |
| 4.93 - 4.99 | ff | 2.94 - 2.97 | ff |
| 4.57 - 4.63 | ff | | |

The $d_{hkl}$ measurings have been stopped at values ranging about 2.97 Å, it is nevertheless possible to carry out $d_{hkl}$ measurings for higher thêta 2 values.

2. A zeolite according to claim 1 the infrared spectrum of which shows Si-OH (about 3,740 $cm^{-1}$) and GaOH (about 3,620 $cm^{-1}$) bands which are less intense than the gallosilicates in previous art with the same Si/Ga ratio than the zeolite according to the invention.

3. A process for preparing a zeolite of the gallosilicate type with a MFI structure comprising :

(a) preparing a dissolved reaction mixture with a pH value at the most equal to 10, containing water, at least one silicium source, at least one tervalent gallium source, at least one source of at least one $F^-$ fluoride ion and a source of at least one structuring agent supplying organic cations containing nitrogen, said mixture having a composition in terms of molar ratios ranging from :

$Si^{IV}/Ga^{III}$ : 2 - 1,000

$F^-/Si^{IV}$ : 0.05 - 3

Organic structuring agent/$Si^{IV}$ : 0.04 - 1

$H_2O/Si^{IV}$ : 4 - 400

(b) heating said mixture up to a temperature at the most equal to 270°C for a duration sufficient enough to obtain gallosilicate crystals,

(c) calcining said crystals at a temperature exceeding 400°C in order to remove the organic or ammonium cations contained in the raw synthesis product.

4. A process according to claim 3 wherein, in stage (a), said structuring agent is selected from the group constituted by the dialkylamines, the trialkylamines, the ammonium cations (deriving from said amines by protonation) and the tetraalkylammonium cations.

5. A process according to claim 3 wherein, in stage (a), said mixture has a composition in terms of molar ratios ranging from :

$Si^{IV}/Ga^{III}$ : 8 - 1,000

$F^-/Si^{IV}$ : 0.2 - 2

Organic structuring agent/$Si^{IV}$ : 0.06 - 0.75

$H_2O/Si^{IV}$ : 6 - 200.

6. A process according to one of claims 3 to 5 wherein the fluoride ion is selected from the group constituted by hydrofluoric acid, the mineral or organic fluorides of an alkaline metal and the hydrolysable compounds which can release at least one fluoride anion in water.

7. Use of a zeolite according to one of claims 1 and 2 as a base for an adsorbant.

8. Use of a zeolite according to one of claims 1 and 2 as a base for a catalyst.